(19) Europäisches Patentamt / European Patent Office / Office européen des brevets

(11) **EP 2 991 854 B1**

(12) **EUROPEAN PATENT SPECIFICATION**

(45) Date of publication and mention
of the grant of the patent:
**16.06.2021 Bulletin 2021/24**

(21) Application number: **14726890.8**

(22) Date of filing: **30.04.2014**

(51) Int Cl.:
**B60L 53/63** *(2019.01)*

(86) International application number:
**PCT/EP2014/058811**

(87) International publication number:
**WO 2014/177608 (06.11.2014 Gazette 2014/45)**

(54) **METHOD FOR ALLOCATING ELECTRICAL POWER OF A SHARED ENERGY SOURCE AND RESOURCE MANAGEMENT SYSTEM**

VERFAHREN ZUR ZUWEISUNG VON ELEKTRISCHER ENERGIE AUS EINER GEMEINSAMEN STROMQUELLE UND BETRIEBSMITTELVERWALTUNGSSYSTEM

PROCÉDÉ D'ALLOCATION DE PUISSANCE ÉLECTRIQUE D'UNE SOURCE D'ÉNERGIE PARTAGÉE ET SYSTÈME DE GESTION DE RESSOURCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2013 EP 13166051**

(43) Date of publication of application:
**09.03.2016 Bulletin 2016/10**

(73) Proprietor: **NEC Corporation**
**Minato-ku, Tokyo 108-8001 (JP)**

(72) Inventors:
• **ETINSKI, Maja**
  **11000 Belgrad (RS)**
• **SCHUELKE, Anett**
  **69251 Gaiberg (DE)**

(74) Representative: **Patent- und Rechtsanwälte Ullrich & Naumann**
**PartG mbB**
**Schneidmühlstrasse 21**
**69115 Heidelberg (DE)**

(56) References cited:
**GB-A- 2 460 500          US-A1- 2010 114 798**
**US-A1- 2010 141 205    US-A1- 2012 245 750**
**US-A1- 2012 277 927    US-A1- 2013 057 364**
**US-A1- 2013 103 191**

**Description**

The present invention relates to a method for allocating electrical power of a shared energy source with a fluctuating power output to a group of competing consumers.

Furthermore, the present invention relates to a resource management system, comprising an energy source with a fluctuating power output shared among a group of competing consumers, wherein each of said consumers has an individual share in said energy source.

The number of renewable energy systems increased rapidly thanks to government incentives and grid-parity reached in some countries. Also, recent technology advancements make various renewable energy systems more available and easier to deploy, even in urban areas. Increasing penetration of renewable energy in residential sector, mainly solar and wind, and government targets for even wider use of renewables demand new control strategies and business models for the integration of Renewable Energy Sources (RES). Also, due to recent reductions of government incentives such as guaranteed feed-in rates, the energy is generally going to be consumed more locally for what new algorithms are needed, especially if an energy source is to be shared among multiple users.

The prior art work in demand management with continuous loads is mainly addressing EV (Electrical Vehicle) and energy storage charging control strategies. The literature classifies this mainly for autonomous EV or ESS (Energy Storage System) units into (a) re-charging schedules governed by the grid, and (b) re-charging methods governed by autonomous agents of any kind. Further, the differentiation is made in negotiations on (i) day-ahead or generally fixed time-period ahead scheme, and (ii) real-time bargaining. For (ii), the typical approaches applied are the classical economic or game-theoretical approaches on charging schemes based on energy prices.

US 2012/0277927 A1 discloses a method for electric vehicle (EV) clustered charge distribution and prioritization, wherein distributed processing units (DPUs) receive member information about an EV or EV user. A power distribution manager (PDM) is coupled to each of the DPUs. The PDM includes a prioritizer that determines a prioritization for charging the EVs based on the member information received by each of the DPUs, wherein the PDM basically assumes availability of a constant power rate.

US 2010/0114798 A1 relates to the management of EV charging, wherein charging is carried out at charging points that are connected to at least one mediator server. Each charging point is arranged to send vehicle data to the mediator server, which is arranged to calculate a vehicle priority and a charging allotment in relation to the number of vehicles at a charging point, to vehicle data, to battery related data, to user data and to data from public utilities and electricity providers.

US 2012/0245750 A1 discloses an EV charging scheduling system including a power database that stores information about a power source including at least one of a power grid and a stationary battery. A scheduling unit calculates available average energy by dividing the electric energy available from the power source by the total number of EVs and further calculates required (demanded) charging energy for each of the EVs.

US 2013/0103191 A1 describes a system for exchanging energy with an electric vehicle, i.e. an energy exchange station, wherein vehicle information (e.g., type of battery, or state of charge of the battery) is provided to a data processing device. Based on this information, the data processing device provides optimized energy exchange settings to the energy exchange station. When a power source formed by a grid has less power available than the demand of several vehicles, the grid power can be distributed over the charging outputs, for example according to priority of the vehicles to drive away.

GB 2 460 500 A discloses methods and systems wherein when recharging electric cars, rechargers and central computers in the electrical grid company and in the service provider take into account car-specific parameters in order to optimize the recharging priorities, for example based on the state of their batteries and heuristics or statistics or automatic repeated identification of cars based on a unique digital ID number. The system can take into account also various regular or historical car-specific parameters or patterns or statistics, such as typical arrival and departure times, typical distances traveled, specific needs based on week days, etc.

US 2010/0141205 A1 relates to dynamic load management for use in recharging vehicles equipped with electrically powered propulsion systems. An E-Grid Sub-Network Load Manager operates to regulate the demands presented by vehicles to an associated Sub-Network thereby to spread the load presented to the service disconnect over time to enable the controllable charging of a large number of vehicles.

In view of the above, it is an objective of the present invention to improve and further develop a method for allocating electrical power of a shared energy source and a resource management system of the initially described type in such a way that, while different user energy requests arrive at arbitrary times, the available energy is shared in a fair manner.

In accordance with the invention, the aforementioned object is accomplished by a method comprising the features of claim 1.

Furthermore, the above mentioned objective is accomplished by a resource management system comprising the features of claim 9.

According to the invention it has first been recognized that when the supply is lower than the demand, a control method needs to distribute the limited resource. While considering many aspects in demand management, one of the crucial concerns is the distribution in a fair manner. Though, the concept of fairness in resource allocation has been investigated for algorithms in other related fields such as computer science and network engineering, it is a new concern in sharing power from an intermittent energy supply. Energy systems, in particular RES (Renewable Energy Sources) systems shared among multiple users can be easily envisioned in era when all residential buildings are featured with roof-top mounted solar panels or parkings featured with vertical axis wind turbines. For instance, tenants from a residential building can invest into a PV (Photovoltaic)-system in order to share generated energy that can be stored in their personal batteries and used when dynamically changed electricity prices are high. Furthermore, wind-powered EV charging stations built on community parkings may apply the present invention to achieve fair energy allocation if the resource is to be shared proportionally to user investments or according to restricted flat-rate contracts when the system is provided by a third-party. It is important to note, that what makes it more difficult to achieve proportional-share fairness is that user demand is not constant but rather appearing irregularly and unpredictably.

According to the invention a power distribution method and a resource management system are proposed which aim at fairness based on a proportional sharing control method where resources are allocated proportionally to consumer's shares in the system, thereby considering consumer's historic energy consumption, i.e. power rates of each currently present load are adjusted according to the appropriate share and previous energy consumption. Consumer's shares can relate to their investment share to the energy source, in particular renewable energy source (RES) for, e.g., private DER (Distributed Energy Resources) installations, or to a payment scheme in their consumption contract or to any other means to define the portion/weight of participation in the local demand management scheme. The method takes current generation and demand requests as well as historic load consumption pattern into account when power allocation is done, respecting consumers' investments in the energy source, regardless of whether the energy source belongs to a user owned or a third-party owned system.

By applying the present invention, locally generated energy can be shared according to private investments or usage contracts, in spite of dynamically fluctuating power generation and stochastic load. Power distribution according to the present invention achieves high utilization of the local fluctuating energy source while respecting fairness, and it respects generation limits for local demand management (i.e. no additional energy from the grid is used, but any excess can be fed into the grid, if applicable).

For third-party owned systems, in case of low generations, consumers that consumed less energy are favored over the ones that already consumed more energy what leads to higher consumer satisfaction.

According to embodiments of the invention the energy source may be a (consumer-owned) local power generation facility, preferably a RES facility, like in particular a PV-system or a windmill-powered plant. However, alternatively, the energy source may also be an excess in power generation coming from a utility or an energy provider during hours of lower demand. In this case, it is assumed that the energy source will typically not be consumer-owned, i.e. built and maintained from user investments, but will be part of a third-party owned system. In the latter case, users might sign a restricted flat-rate contract that allows them to use as much energy as they wish if the energy is abundant.

According to a preferred embodiment time intervals of configurable duration may be defined, wherein allocated power fractions are periodically re-computed at the beginning of each time interval in order to achieve the proportional-share fairness. Advantageously, when power rates are updated, i.e. when computation of power fraction allocation is performed, an optimization problem may be solved. In particular, it may be provided that the optimization aims to maximize the consumption of the power instantaneously available from the energy source, while at the same time aims to minimize the difference in historic energy consumption among different users/consumers. The minimization of the difference in historic energy consumption among different users/consumers takes into consideration the individual shares of the consumers in the energy source.

According to a preferred embodiment a consumer's historic energy consumption may be calculated as the consumer's absolute energy consumption accumulated over a predefined time duration, preferably over an entire accounting period (e.g. a month) or over a configurable number of time intervals as defined above. Alternatively, instead of maintaining fairness by considering only absolute accumulated user energy consumption, historic energy usage can be seen more generally. For instance, the calculation of a consumer's historic energy consumption may take into consideration the demand pattern of previous energy demand requests. Advantageously, different weights may be used to multiply absolute values of consumed energy depending on the time of use or on the times energy demand requests were made. For instance, energy consumed during peak hours might be considered by assigning such usage a higher weight.

According to a preferred embodiment the energy demand requests may represent continuous power loads with a stochastic/arbitrary distribution in time, preferably corresponding to battery recharging. Energy demands requested from continuous loads may be characterized by their flexibility in power rate, certain flexibility in charging time, and their ability to consume the demanded power in an interruptible manner, i.e. in different portions in terms of power rate and/or energy fractions with gaps in delivery. Typical applications are batteries in electrical vehicles (EVs) and energy storages.

Advantageously, in view of this a consumer's energy demand request may be described with three parameters:

a minimal power rate, a maximal power rate and/or a total amount of requested energy. Based on the information contained in an energy demand request it may be provided that the scheduler, upon receiving an energy demand request, performs the computation of power fraction allocation in such a way that the power allocated to that energy demand request is kept within the range of power rates indicated in the request. Energy demand requests might not be served for a period of time if power cannot be allocated within the indicated power range.

According to a preferred embodiment the resource management system according to the present invention comprises a buffer for keeping energy demand requests that can not be served due to insufficient power instantaneously available from the energy source. The requests may be buffered for a configurable waiting time, and may be deleted when the requests have not been served after expiration of the waiting time.

According to still another preferred embodiment the resource management system according to the present invention may comprise connectivity to the grid for feeding in any excess energy not being allocated to the group of consumers.

There are several ways how to design and further develop the teaching of the present invention in an advantageous way. To this end it is to be referred to the patent claims subordinate to patent claims 1 and 9 on the one hand and to the following explanation of preferred embodiments of the invention by way of example, illustrated by the drawing on the other hand. In connection with the explanation of the preferred embodiments of the invention by the aid of the drawing, generally preferred embodiments and further developments of the teaching will be explained. In the drawing

Fig. 1     is a schematic view illustrating a scenario of energy allocation in a wind-powered EV charging station in accordance with an embodiment of the invention,

Fig. 2     is a schematic view illustrating a generic scenario of periodic power allocation in accordance with another embodiment of the invention,

Fig. 3     is a diagram illustrating a power allocation framework in accordance with an embodiment of the invention, and

Fig. 4     is a diagram showing the results of a simulation of a power allocation algorithm in accordance with an embodiment of the invention.

Generally, the proportional-share fairness power allocation algorithm applied in connection with embodiments of the invention is designed for systems with an intermittent energy source. This energy source is shared among multiple users/consumers that occasionally request energy. Therefore, the power allocation method and the resource management system of the present invention would be practical for use in particular in the following examples of shared energy systems:

Example 1: Tenants from a residential building can invest into a PV-system in order to share generated energy that can be stored in their personal batteries and used when dynamically changing electricity prices are high. Even with a constant pricing contract, batteries would help allowing consumption to happen after generation. Residential PV-systems are expected to become ubiquitous once grid-parity is achieved what is already the case in some countries.

Examples 2: Wind-powered EV charging stations built on community parking spaces will need to achieve fair energy allocation if the resource is to be shared proportionally to user investments or according to restricted flat-rate contracts when the system is provided by a third-party. With vertical-axis wind mills, wind-powered charging stations can be deployed even in urban zones. The world's first wind-powered electric vehicle charging station, the Sanya SkyPump, was introduced in 2012.

Naturally, the application field of the present invention is not restricted to the two examples outlined above. In fact, many other application scenarios with an intermittent energy source shared by a group of users can be envisioned, as will be easily appreciated by those skilled in the art.

Generally, in the above examples an energy request occurs, e.g., when an electric vehicle starts recharging or when a residential battery is able to receive energy, meaning that it is not full neither currently discharging. Each battery needs to be able to communicate to the system how much energy is missing to fully recharge it. A battery can leave the system even before it is full. In case of vehicle charging, a user might need the vehicle before it is fully recharged. Similarly, in the residential energy use scenario a tenant might decide to use stored energy before the battery is completely recharged. The time when an energy request ends is not known in advance.

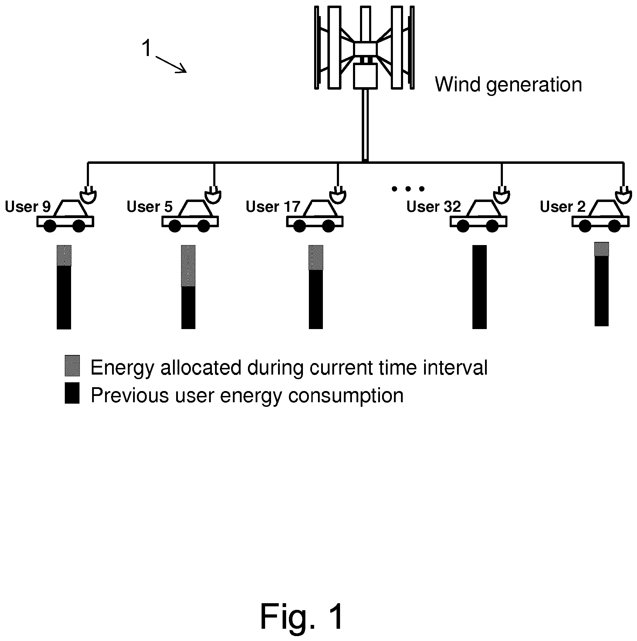

Turning now to Fig. 1, this figure illustrates an application scenario of an electrical power allocation method in accordance with an embodiment of the present invention. More specifically, Fig. 1 depicts a wind-powered PHEV (Plug-in Hybrid Electric Vehicles) charging station 1 and a number of users with currently connected loads. Here, power fractions allocated to each battery currently present in the system are recomputed by a scheduler (not shown) at the beginning of each time interval of duration *t*. Each battery communicates its minimal and maximal charging rates to the scheduler. Battery charging is done through smart power outlets that allow recharging at any power rate within the allowed range.

Previous energy consumptions of each active user, which is taken into consideration in the current power allocation process, are shown below the corresponding vehicle. Fig. 1 also shows the energy allocated to each vehicle for the current interval illustrating the main idea behind the power allocation algorithm according to the present invention.

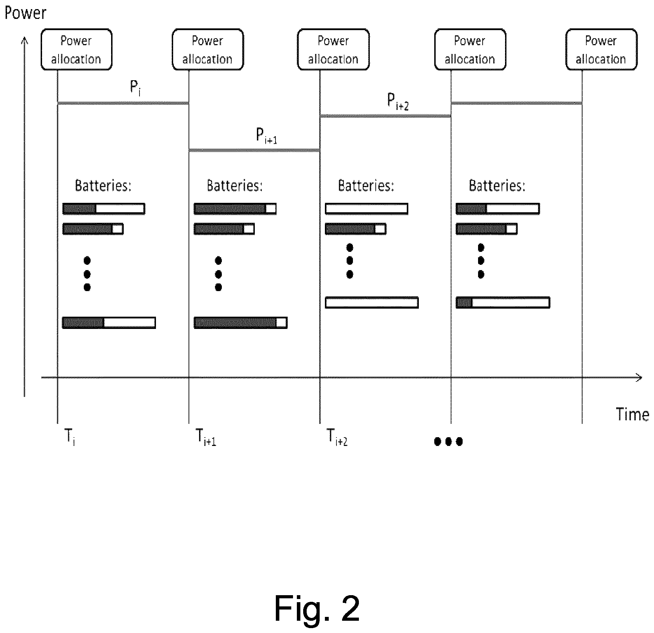

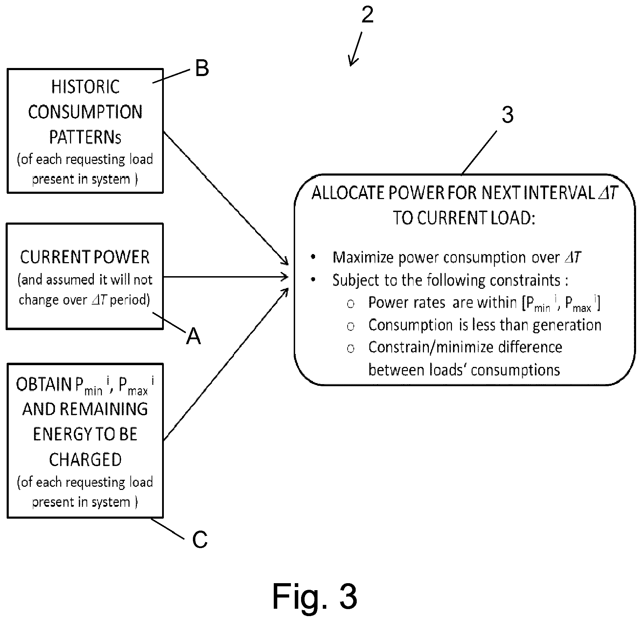

When power rates are updated, an optimization problem is solved, as will be described in more detail in connection with Fig. 3. Generally, the optimization maximizes the consumption of the available power, while at the same time aims to minimize the difference in total energy consumption among different users/consumers in the past, for instance over the accounting time period. As illustrated in Fig. 2, this allocation problem is solved periodically, at time intervals $T_i$, $T_{i+1}$, $T_{i+2}$, etc., depending on power generation, power demand and individual historic load patterns Here, power rates for each connected load/battery at the beginning of an interval are determined so that at the end of the interval the difference in energy distribution among different users is minimized.

Turning now to Fig. 3, this figure illustrates a resource management system 2 with a power allocation framework in accordance with an embodiment of the invention. More specifically, the diagram of Fig. 3 shows how power recharging rates are computed for each active user in an energy-sharing system like the ones described in connection with Figs. 1 and 2. A scheduler 3 of the resource management system 2 gets as input (denoted input "A") the current power generation, which is assumed not to change over the next interval. Furthermore, the scheduler 3 gets as input the following data of each user currently present in the system: the historic energy consumptions and shares in the system (denoted input "B") and power and energy characteristics and specifications of the current loads (denoted input "C"). It is noted that input "B" may be provided either in form of absolute accumulated user energy consumption only or in form of more detailed consumption patterns. Input "C" may, in particular, include information on the current aggregated power/energy demand of all users competing at a certain time interval for the available resource, as well as information on the stochastic load profiles, for instance the loads' power range [$P_{min}{}^i$, $P_{max}{}^i$]. In this regard it is important to note that each load can request a different amount of energy and that loads can stay in the system for an arbitrary time but do not have to be served if there is not enough energy for the current demand or if power cannot be served within the respective power range.

Based on the above information received as input, the scheduler 2 periodically executes an online algorithm for proportional-share fairness that takes into consideration that consumers may have different shares in the system. Specifically, the assumed fairness takes into account a combination of implying a proportional sharing scheme and the users' historic energy usage. The method distributes the available energy by dynamically assigning a fraction of instantaneous power to each currently present load considering user's previous energy consumption (meaning relationship to own historic consumption and relation to the other registered loads in past and current terms) so that proportional-share fairness is fulfilled.

According to a preferred embodiment of the algorithm may be implemented as follows:

The algorithm is based on an optimization problem, with the problem variables, parameters and their meaning as given in the following overview:

| Name | Meaning |
|---|---|
| $N$ | Current number of requests |
| $P_{gen}{}^k$ | Power generation over the *k - th* interval |
| $T$ | Interval duration |
| $E_i^k$ | Previous energy consumption of user *i* |
| $P_i^k$ | Power to be allocated to user *i* during the *k - th* interval |
| $Pmin_i$ | Minimal recharge rate of battery of user *i* |
| $Pmax_i$ | Maximal recharge rate of battery of user *i* |
| $s_i$ | Share of user *i* in the system (value between 0 and 1) |

A decision variable $P_i^k$ represents power allocated to the request from user *i* over the *k - th* interval.

In order to get a linear programming problem, the optimization problem is formulated in a form that can be easily linearized. The following objective function is maximized:

$$\sum_{i=1}^{N} P_i^k \qquad (1)$$

It represents the total amount of power allocated to user requests during the $k$ - $th$ interval and it is minimized subject to the following constraints:

1.

$$\sum_{i=1}^{N} P_i^k \leq Pgen^k \qquad (2)$$

This constraint limits the total allocated power over the $k$ - $th$ interval to a value lower or equal to the current power generation.

2.

$$Pmin_i \leq P_i^k \leq Pmax_i \,, \forall i \qquad (3)$$

This constraint represents a group of constraints that keep power allocated to each connected load within its recharging power range.

3.

$$\left| s_{i+1}(E_i + tP_i^k) - s_i(E_{i+1} + tP_{i+1}^k) \right| \leq \epsilon + Correction_i^k \,, \forall i \,. \qquad (4)$$

This last group of constraints is designed to minimize the difference in energy consumption between users. The difference in energy allocated to the user $i$ and user $i + 1$ (for $i = N$ it is assumed $i + 1 = 1$) at the end of the $k$ - $th$ interval has to be lower or equal to $\varepsilon + Correction_i^k$. $Correction_i^k$ is defined as follows:

$$Correction_i^k = max(0, \left| s_{i+1}E_i - s_iE_{i+1} \right| - tPmax) \qquad (5)$$

where *Pmax* is defined with:

$$Pmax = \begin{cases} s_{i+1}Pmax_i, & \text{if } E_i \leq E_{i+1} \\ s_iPmax_{i+1}, & \text{otherwise.} \end{cases} \qquad (6)$$

This correction represents a part of the difference in energy consumption between users $i$ and $i + 1$ that can not be corrected over the next interval. This happens when the difference in previous energy consumption between two users is very high. $\varepsilon$ in (4) is needed to enable balancing among multiple users. The computation may start with a low value of $\varepsilon$ and increase it gradually until an optimal solution for the problem is found.

It is noted that in the above example, when maintaining fairness only absolute accumulated user energy consumption has been considered. However, historic energy usage may be seen more general. In particular, different weights can be used to multiply absolute values of consumed energy depending on the time of use. For instance, energy consumed during peak hours might get assigned higher weights.

According to an alternative policy, loads may be always recharged at their maximum power rates considering fairness in allocation at the beginning of each time slice. In this solution the connected loads are in a queue sorted by previous energy consumption of their users in descending order. Each time slice (i.e. a time interval of duration $t$) the first $n$ consumers from the head of the queue w ill be recharged at their maximal rates where $n$ is the maximal number of consumers that can be served with the power generation at the beginning of the interval. In this way, the order of consumers changes with their consumption enforcing fairness.

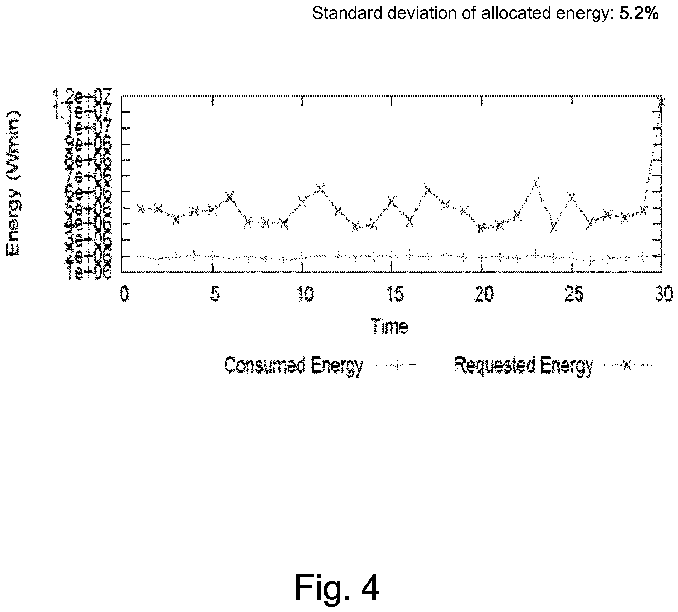

Fig. 4 shows the results of a simulation performed on the basis of a power allocation algorithm according to an embodiment of the invention for a setup of 30 users with Plug-in Hybrid Electric Vehicles (PHEV). The simulation is performed for the period of 28 days using the wind generation trace from Pacific Northwest from February 2013. The assumed maximal generation rate is 8.8 KW what roughly corresponds to two small vertical-axis windmills Sanya Skypump. Total number of recharging requests in the generated load trace is 840 and all users except user #30 request similar amount of energy. Consumer #30 requests energy more frequently than others though all consumers have equal shares in the system. Once an energy request is submitted (PHEV plugged in), the vehicle remains connected for 3 to max. 12 hours. Also, vehicles request between 1 and 5 KWh. As can be seen in Fig. 4, the employed approach achieves excellent fairness without compromising substantially the utilization of wind energy.

The main objective with the proposed power allocation scheme was to allocate fair shares of energy to all users. Though the algorithm achieved very low variability among energy amounts allocated to each user, the simulation showed that utilization of the available energy was lower than when fairness was not considered. In systems with the possibility of feed-in this should be a desired behaviour since the non-allocated energy is not wasted. For systems without the feed-in option, the optimization problem can be reformulated to favour higher power consumption over proportional-share fairness. For this purpose, the goal of minimization the difference in allocated energy among users can be moved from the above constraint (4) to the objective function. In this case, the objective would be to minimize the following f unction:

$$\sum_{i=1}^{N} |s_{i+1}(E_i + tP_i^k) - s_i(E_{i+1} + tP_{i+1}^k)| + c|\sum_{i=1}^{N} P_i^k - Pgen^k|$$

$$(7)$$

where c is a coefficient used to set relative importance of power consumption and fair energy allocation.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1.   Method for allocating electrical power of a shared energy source with a fluctuating power output to a group of competing consumers (3), the method comprising the steps of
specifying for each of said consumers an individual share in said energy source,
receiving, at a scheduler (3), energy demand requests from said consumers, and
periodically executing, by said scheduler (3), a proportional-share fairness energy distribution control scheme that allocates each energy demand request received from a consumer a fraction of the power instantaneously available from said energy source, wherein the power fraction allocated to a consumer's energy demand request is adjusted depending on said consumer's individual share and on said consumer's historic energy consumption,
wherein computation of power fraction allocation is performed by solving an optimization problem that maximizes the consumption of power instantaneously available from said energy source and that minimizes the differences in historic energy consumption among different consumers, wherein the minimization of the difference in historic energy consumption among different consumers takes into consideration the individual shares of the consumers in said energy source,
wherein solving the optimization problem includes minimizing the objective function

$$\sum_{i=1}^{N} |s_{i+1}(E_i + tP_i^k) - s_i(E_{i+1} + tP_{i+1}^k)| + c|\sum_{i=1}^{N} P_i^k - Pgen^k|$$

with the following notation

$N$ Current number of requests
$P_{gen}^k$ Power generation over the $k$ - $th$ interval
$t$ Interval duration
$E_i$ Previous energy consumption of user $i$
$P_i^k$ Power to be allocated to user $i$ during the $k$ - $th$ interval
$s_i$ Share of user $i$ in the system (value between 0 and 1), and
$c$ Coefficient used to set relative importance of power consumption and fair energy allocation.

2. Method according to claim 1, comprising:

   defining time intervals of configurable duration, and
   periodically re-computing said allocated power fractions at the beginning of each time interval.

3. Method according to claim 1 or 2, wherein a consumer's historic energy consumption is calculated as said consumer's absolute energy consumption accumulated over a predefined number of time intervals, preferably over an entire accounting period.

4. Method according to claim 1 or 2, wherein a consumer's historic energy consumption takes into consideration the demand pattern of previous energy demand requests.

5. Method according to claim 4, wherein previous consumptions of a consumer are weighted depending on the times energy demand requests were made.

6. Method according to any of claims 1 to 5, wherein said consumers' energy demand requests represent continuous power loads, preferably corresponding to battery recharging.

7. Method according to any of claims 1 to 6, wherein said consumers' energy demand requests indicate at least one of a minimal power rate, a maximal power rate, and a total amount of requested energy.

8. Method according to any of claims 1 to 7, wherein computation of power fraction allocation is performed subject to the constraint that power allocated to each energy demand request is kept within the range of power rates indicated in said request.

9. Resource management system, in particular for executing a method according to any of claims 1 to 8, comprising an energy source with a fluctuating power output shared among a group of competing consumers (3), wherein each of said consumers has an individual share in said energy source,
   wherein the system further comprises a scheduler (3) for allocating consumers of said group of consumers electrical power generated by said energy source, said scheduler (3) being configured
   to receive energy demand requests from said consumers, and
   to periodically perform proportional-share fairness energy distribution scheduling by allocating each energy demand request received from a consumer a fraction of the power instantaneously available from said energy source, wherein the power fraction allocated to a consumer's energy demand request is adjusted depending on said consumer's individual share and on said consumer's historic energy consumption,
   wherein said scheduler (3) is configured to perform computation of power fraction allocation by solving an optimization problem that maximizes the consumption of power instantaneously available from said energy source and that minimizes the differences in historic energy consumption among different consumers, wherein the minimization of the difference in historic energy consumption among different consumers takes into consideration the individual shares of the consumers in said energy source,
   wherein solving the optimization problem includes minimizing the objective function

$$\sum_{i=1}^{N}|s_{i+1}(E_i+tP_i^k)-s_i(E_{i+1}+tP_{i+1}^k)|+c|\sum_{i=1}^{N}P_i^k-Pgen^k|$$

   with the following notation

   $N$ Current number of requests
   $P_{gen}{}^k$ Power generation over the $k$ - $th$ interval
   $t$ Interval duration
   $E_i$ Previous energy consumption of user $i$
   $P_i^k$ Power to be allocated to user $i$ during the $k$ - $th$ interval
   $s_i$ Share of user $i$ in the system (value between 0 and 1), and
   $c$ Coefficient used to set relative importance of power consumption and fair energy allocation.

10. System according to claim 9, wherein said energy source is a local power generation facility, preferably RES (Renewable Energy Sources) facility.

11. System according to claim 9 or 10, further comprising a buffer for keeping, for a predefined waiting time, energy demand requests that can not be served due to insufficient power instantaneously available from said energy source.

12. System according to any of claims 9 to 11, further comprising connectivity to the grid for feeding in any excess energy not being allocated to said group of consumers.

**Patentansprüche**

1. Verfahren zur Zuteilung von elektrischer Energie einer gemeinsam genutzten Energiequelle mit schwankender Leistungsabgabe an eine Gruppe von konkurrierenden Verbrauchern (3), wobei das Verfahren die folgenden Schritte umfasst:

Festlegen eines individuellen Anteils an der Energiequelle für jeden der Verbraucher
Empfangen von Energiebedarfsanforderungen von den Verbrauchern an einem Scheduler (3), und periodisches Ausführen eines Energieverteilungs-Steuerungsschemas mit proportionaler Anteilsgerechtigkeit durch den Scheduler (3), das jeder von einem Verbraucher empfangenen Energiebedarfsanforderung einen Anteil der augenblicklich von der Energiequelle verfügbaren Leistung zuweist, wobei der der Energiebedarfsanforderung eines Verbrauchers zugewiesene Leistungsanteil in Abhängigkeit von dem individuellen Anteil des Verbrauchers und dem historischen Energieverbrauch des Verbrauchers angepasst wird, wobei die Berechnung der Leistungsanteilszuweisung durch Lösen eines Optimierungsproblems durchgeführt wird, das den Verbrauch von augenblicklich von der Energiequelle verfügbarer Leistung maximiert und das die Unterschiede im historischen Energieverbrauch zwischen verschiedenen Verbrauchern minimiert, wobei die Minimierung des Unterschieds im historischen Energieverbrauch zwischen verschiedenen Verbrauchern die individuellen Anteile der Verbraucher an der Energiequelle berücksichtigt, wobei das Lösen des Optimierungsproblems das Minimieren der Zielfunktion

$$\sum_{i=1}^{N} |s_{i+1}(E_i + tP_i^k) - s_i(E_{i+1} + tP_{i+1}^k)| + c|\sum_{i=1}^{N} P_i^k - Pgen^k|$$

umfasst, mit der folgenden Notation

$N$ aktuelle Anzahl der Anforderungen
$P_{gen}{}^k$ Leistungserzeugung über das $k$ - $te$ Intervall
$t$ Intervalldauer
$E_i$ bisheriger Energieverbrauch des Benutzers $i$
$P_i^k$ dem Benutzer $i$ zuzuweisende Leistung während des $k$ - $ten$ Intervalls
$s_i$ Anteil des Benutzers $i$ am System (Wert zwischen 0 und 1), und
$c$ Koeffizient, der verwendet wird, um die relative Wichtigkeit des Energieverbrauchs und der fairen Energiezuweisung festzulegen.

2. Verfahren nach Anspruch 1, umfassend:

Definieren von Zeitintervallen mit konfigurierbarer Dauer, und
periodisches Neuberechnen der zugewiesenen Leistungsanteile zu Beginn eines jeden Zeitintervalls.

3. Verfahren nach Anspruch 1 oder 2, wobei der historische Energieverbrauch eines Verbrauchers als der über eine vordefinierte Anzahl von Zeitintervallen, vorzugsweise über eine gesamte Abrechnungsperiode, kumulierte absolute Energieverbrauch des Verbrauchers berechnet wird.

4. Verfahren nach Anspruch 1 oder 2, wobei der historische Energieverbrauch eines Verbrauchers das Bedarfsmuster früherer Energiebedarfsanfragen berücksichtigt.

5. Verfahren nach Anspruch 4, wobei frühere Verbräuche eines Verbrauchers in Abhängigkeit von den Zeitpunkten der Energiebedarfsanfragen gewichtet werden.

6. Verfahren nach einem der Ansprüche 1 bis 5, wobei die Energiebedarfsanfragen der Verbraucher kontinuierliche Stromlasten darstellen, die vorzugsweise dem Aufladen von Batterien entsprechen.

7. Verfahren nach einem der Ansprüche 1 bis 6, wobei die Energiebedarfsanfragen der Verbraucher mindestens eine der folgenden Angaben enthalten: eine minimale Leistungsrate, eine maximale Leistungsrate und eine Gesamtmenge der angeforderten Energie.

8. Verfahren nach einem der Ansprüche 1 bis 7, wobei die Berechnung der Leistungsanteilszuweisung unter der Bedingung durchgeführt wird, dass die jeder Energiebedarfsanforderung zugewiesene Leistung innerhalb des Bereichs der in der Anforderung angegebenen Leistungsraten gehalten wird.

9. Ressourcenmanagementsystem, insbesondere zum Ausführen eines Verfahrens nach einem der Ansprüche 1 bis 8, umfassend eine Energiequelle mit einer schwankenden Leistungsabgabe, die von einer Gruppe konkurrierender Verbraucher (3) gemeinsam genutzt wird, wobei jeder der Verbraucher einen individuellen Anteil an der Energiequelle hat,
wobei das System ferner einen Scheduler (3) zum Zuteilen von durch die Energiequelle erzeugter elektrischer Energie an Verbraucher der Gruppe von Verbrauchern umfasst, wobei der Scheduler (3) konfiguriert ist Energiebedarfsanforderungen von den Verbrauchern zu empfangen, und periodisch eine Energieverteilungsplanung mit proportionaler Anteilsgerechtigkeit durchzuführen, indem jeder von einem Verbraucher empfangenen Energiebedarfsanforderung ein Anteil der augenblicklich von der Energiequelle verfügbaren Leistung zugewiesen wird, wobei der der Energiebedarfsanforderung eines Verbrauchers zugewiesene Leistungsanteil in Abhängigkeit von dem individuellen Anteil des Verbrauchers und dem historischen Energieverbrauch des Verbrauchers angepasst wird,
wobei der Scheduler (3) so konfiguriert ist, dass er die Berechnung der Leistungsanteilszuweisung durch Lösen eines Optimierungsproblems durchführt, das den Verbrauch der augenblicklich aus der Energiequelle verfügbaren Leistung maximiert und die Unterschiede im historischen Energieverbrauch zwischen verschiedenen Verbrauchern minimiert, wobei die Minimierung des Unterschieds im historischen Energieverbrauch zwischen verschiedenen Verbrauchern die individuellen Anteile der Verbraucher an der Energiequelle berücksichtigt,
wobei das Lösen des Optimierungsproblems das Minimieren der Zielfunktion

$$\sum_{i=1}^{N} \left| s_{i+1}(E_i + tP_i^k) - s_i(E_{i+1} + tP_{i+1}^k) \right| + c \left| \sum_{i=1}^{N} P_i^k - Pgen^k \right|$$

umfasst, mit der folgenden Notation

$N$ aktuelle Anzahl der Anforderungen
$P_{gen}^k$ Leistungserzeugung über das $k$ - $te$ Intervall
$t$ Intervalldauer
$E_i$ bisheriger Energieverbrauch des Benutzers $i$
$P_i^k$ dem Benutzer $i$ zuzuweisende Leistung während des $k$ - $ten$ Intervalls
$s_i$ Anteil des Benutzers $i$ am System (Wert zwischen 0 und 1), und
$c$ Koeffizient, der verwendet wird, um die relative Wichtigkeit des Energieverbrauchs und der fairen Energiezuweisung festzulegen.

10. System nach Anspruch 9, wobei die Energiequelle eine lokale Stromerzeugungsanlage, vorzugsweise eine RES-Anlage (Renewable Energy Sources), ist.

11. System nach Anspruch 9 oder 10, ferner umfassend einen Puffer, um für eine vordefinierte Wartezeit Energiebedarfsanforderungen zu halten, die aufgrund von unzureichender, sofort verfügbarer Leistung der Energiequelle nicht bedient werden können.

12. System nach einem der Ansprüche 9 bis 11, ferner umfassend eine Verbindung zum Netz zur Einspeisung von überschüssiger Energie, die nicht der Gruppe von Verbrauchern zugeordnet wird.

**Revendications**

1. Procédé d'attribution de puissance électrique d'une source d'énergie partagée ayant une sortie de puissance fluctuante à un groupe de consommateurs (3) en concurrence, le procédé comprenant les étapes consistant à spécifier pour chacun desdits consommateurs une part individuelle dans ladite source d'énergie, recevoir, au niveau d'un ordonnanceur (3), des demandes de besoin en énergie desdits consommateurs, et exécuter périodiquement, par ledit ordonnanceur (3), un plan de commande de distribution d'énergie avec une équité de part proportionnelle qui attribue à chaque demande de besoin en énergie reçue d'un consommateur une fraction de la puissance instantanément disponible auprès de ladite source d'énergie, dans lequel la fraction de puissance attribuée à une demande de besoin en énergie d'un consommateur est ajustée en fonction de la part individuelle dudit consommateur et de l'historique de consommation d'énergie dudit consommateur, dans lequel un calcul informatique d'attribution de fraction de puissance est réalisé par résolution d'un problème d'optimisation qui maximise la consommation de puissance instantanément disponible auprès de ladite source d'énergie et qui minimise les différences d'historiques de consommation d'énergie parmi des consommateurs différents, dans lequel la minimisation de la différence d'historique de consommation d'énergie parmi des consommateurs différents tient compte des parts individuelles des consommateurs dans ladite source d'énergie, dans lequel la résolution du problème d'optimisation comporte une minimisation de la fonction objective

$$\sum_{i=1}^{N} \left| s_{i+1}(E_i + t P_i^k) - s_i(E_{i+1} + t P_{i+1}^k) \right| + c \left| \sum_{i=1}^{N} P_i^k - Pgen^k \right|$$

avec la notation suivante

$N$ nombre actuel de demandes
$P_{gen}{}^k$ génération de puissance sur le $k^{-ième}$ intervalle
$t$ durée d'intervalle
$E_i$ consommation d'énergie antérieure de l'utilisateur $i$
$P_i^k$ puissance à attribuer à l'utilisateur $i$ pendant le $k^{-ième}$ intervalle
$s_i$ part de l'utilisateur $i$ dans le système (valeur entre 0 et 1), et
$c$ Coefficient utilisé pour établir une importance relative de consommation

de puissance et une attribution d'énergie équitable.

2. Procédé selon la revendication 1, comprenant :

   la définition d'intervalles de temps de durée configurable, et
   le nouveau calcul informatique périodique desdites fractions de puissance attribuée au début de chaque intervalle de temps.

3. Procédé selon la revendication 1 ou 2, dans lequel un historique de consommation d'énergie d'un consommateur est calculé sous la forme d'une consommation d'énergie absolue dudit consommateur cumulée sur un nombre prédéfini d'intervalles de temps, de préférence sur une période comptable entière.

4. Procédé selon la revendication 1 ou 2, dans lequel un historique de consommation d'énergie d'un consommateur tient compte du schéma de demande de demandes de besoin en énergie antérieures.

5. Procédé selon la revendication 4, dans lequel des consommations antérieures d'un consommateur sont pondérées en fonction des moments auxquels des demandes de besoin en énergie ont été effectuées.

6. Procédé selon l'une quelconque des revendications 1 à 5, dans lequel des demandes de besoin en énergie desdits consommateurs représentent des charges de puissance continues, correspondant de préférence à une recharge de batterie.

7. Procédé selon l'une quelconque des revendications 1 à 6, dans lequel des demandes de besoin en énergie desdits consommateurs indiquent au moins l'un parmi un débit de puissance minimal, un débit de puissance maximal, et une quantité totale d'énergie demandée.

8. Procédé selon l'une quelconque des revendications 1 à 7, dans lequel un calcul informatique d'attribution de fraction de puissance est réalisé en étant soumis à la contrainte selon laquelle une puissance attribuée à chaque demande de besoin en énergie est maintenue dans la plage de débits de puissance indiqués dans ladite demande.

9. Système de gestion de ressources, en particulier pour exécuter un procédé selon l'une quelconque des revendications 1 à 8, comprenant une source d'énergie avec une sortie de puissance fluctuante partagée parmi un groupe de consommateurs (3) en concurrence, dans lequel chacun desdits consommateurs a une part individuelle dans ladite source d'énergie,
dans lequel le système comprend en outre un ordonnanceur (3) pour attribuer aux consommateurs dudit groupe de consommateurs une puissance électrique générée par ladite source d'énergie, ledit ordonnanceur (3) étant configuré
pour recevoir des demandes de besoin en énergie desdits consommateurs, et pour réaliser périodiquement un ordonnancement de distribution d'énergie avec une équité de part proportionnelle par attribution à chaque demande de besoin en énergie reçue d'un consommateur d'une fraction de puissance instantanément disponible auprès de ladite source d'énergie, dans lequel la fraction de puissance attribuée à une demande de besoin en énergie d'un consommateur est ajustée en fonction de la part individuelle dudit consommateur et de l'historique de consommation d'énergie dudit consommateur,
dans lequel ledit ordonnanceur (3) est configuré pour réaliser un calcul informatique d'attribution de fraction de puissance par résolution d'un problème d'optimisation qui maximise la consommation de puissance instantanément disponible auprès de ladite source d'énergie et qui minimise les différences d'historiques de consommation d'énergie parmi des consommateurs différents, dans lequel la minimisation de la différence d'historique de consommation d'énergie parmi des consommateurs différents tient compte des parts individuelles des consommateurs dans ladite source d'énergie,
dans lequel la résolution du problème d'optimisation comporte une minimisation de la fonction objective

$$\sum_{i=1}^{N} |s_{i+1}(E_i + tP_i^k) - s_i(E_{i+1} + tP_{i+1}^k)| + c|\sum_{i=1}^{N} P_i^k - Pgen^k|$$

avec la notation suivante

   $N$ nombre actuel de demandes
   $P_{gen}^K$ génération de puissance sur le $k^{-ième}$ intervalle
   $t$ durée d'intervalle
   $E_i$ consommation d'énergie antérieure de l'utilisateur $i$
   $P_i^k$ puissance à attribuer à l'utilisateur $i$ pendant le $k^{-ième}$ intervalle
   $s_i$ part de l'utilisateur $i$ dans le système (valeur entre 0 et 1), et
   $c$ coefficient utilisé pour établir une importance relative de consommation

de puissance et une attribution d'énergie équitable.

10. Système selon la revendication 9, dans lequel ladite source d'énergie est une installation de génération de puissance locale, de préférence une installation RES (à sources d'énergie renouvelables).

11. Système selon la revendication 9 ou 10, comprenant en outre un tampon pour conserver, pendant un temps d'attente prédéfini, des demandes de besoin en énergie qui ne peuvent pas être satisfaites en raison d'une puissance insuffisante instantanément disponible auprès de ladite source d'énergie.

12. Système selon l'une quelconque des revendications 9 à 11, comprenant en outre une connectivité au réseau pour fournir tout excès d'énergie non attribuée audit groupe de consommateurs.

Energy allocated during current time interval
Previous user energy consumption

Fig. 1

Fig. 2

2

3

HISTORIC
CONSUMPTION
PATTERNs
(of each requesting load
present in system )

B

CURRENT POWER
(and assumed it will not
change over $\Delta T$ period)

A

OBTAIN $P_{min}{}^{i}$, $P_{max}{}^{i}$
AND REMAINING
ENERGY TO BE
CHARGED
(of each requesting load
present in system )

C

ALLOCATE POWER FOR NEXT INTERVAL $\Delta T$
TO CURRENT LOAD:

- Maximize power consumption over $\Delta T$
- Subject to the following constraints :
  ○ Power rates are within [$P_{min}{}^{i}$, $P_{max}{}^{i}$]
  ○ Consumption is less than generation
  ○ Constrain/minimize difference
    between loads' consumptions

# Fig. 3

Standard deviation of allocated energy: **5.2%**

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120277927 A1
- US 20100114798 A1
- US 20120245750 A1
- US 20130103191 A1
- GB 2460500 A
- US 20100141205 A1